(19) Europäisches Patentamt
European Patent Office
Office européen des brevets

(11) Publication number: **0 202 753**
**A2**

(12) # EUROPEAN PATENT APPLICATION

(21) Application number: **86302666.2**

(22) Date of filing: **10.04.86**

(51) Int. Cl.[4]: **B 01 J 2/30**

(30) Priority: **24.04.85 ZA 853062**

(43) Date of publication of application: **26.11.86 Bulletin 86/48**

(84) Designated Contracting States: **BE DE FR GB IT NL SE**

(71) Applicant: **AECI LIMITED**
**16th Floor Office Tower Carlton Centre Commissioner Street P.O. Box 1122**
**Johannesburg 2000 Transvaal(ZA)**

(72) Inventor: **Thornton, Lesley Patricia**
**340 Vine Avenue Ferndale**
**Randburg Transvaal Province(ZA)**

(74) Representative: **Denerley, Paul Millington, Dr. et al,**
**Imperial Chemical Industries PLC Legal Department: Patents P.O. Box 6, Bessemer Road**
**Welwyn Garden City Hertfordshire AL7 1HD(GB)**

(54) **Method of combatting of caking of particulate materials.**

(57) The invention provides a method of treating a particulate material to combat caking thereof, which comprises at least partially coating at least some of the particles thereof with an anti-caking agent comprising a substance wherein a lipophilic moiety is attached to a hydrophilic moiety by means of an alkylating reactive grouping. The invention also provides a method of treating a substrate to protect it from ultra violet radiation which comprises at least partially coating it with a coating material which comprises a protective substance wherein a lipophilic moiety is attached to a hydrophilic moiety by means of an alkylating reactive grouping, the hydrophilic moiety being a polar organic residue having a molecular weight of at most 450 and being a grouping selected from the residues of polyols, internal anhydrides of polyols, amines, amides, alkanolamines, azolines and poly(oxyethylene) groupings having at most 10 ethylene oxide units. The invention also provides an anti-caking agent and a coating material for protecting a substrate from ultra violet radiation.

EP 0 202 753 A2

Croydon Printing Company Ltd

0202753

METHOD OF COMBATTING CAKING OF PARTICULATE MATERIALS

THIS INVENTION relates to a method of treating a particulate material to combat caking thereof.

According to the invention, there is provided a method of treating a particulate material to combat caking thereof, which comprises at least partially coating at least some of the particles thereof with an anti-caking agent comprising a substance wherein a lipophilic moiety is attached to a hydrophilic moiety by means of an alkylating reactive grouping.

The method may comprise substantially entirely coating substantially all the particles with said anti-caking agent, although even partial coating of only some of the particles can in principle combat any tendency of the particulate material to cake.

The lipophilic moiety of the anti-caking agent may be either monomeric or polymeric in nature, provided that it contains a chain structure having a backbone of sufficient length to confer the necessary or acceptable anti-caking characteristics to the coated particulate material. In this regard the Applicant believes that the hydrophilic moieties attach themselves to the surface of the particle, with the

lipophilic moieties extending away from the points or zones of attachment, to cover the particle with a coating which has an essentially lipophilic outer surface, thereby giving the particle a hydrophobic outer surface, which in particular resists any caking which is caused by or aggravated by the presence of moisture.

The lipophilic moiety of the anti-caking agent may have a chain structure which comprises a backbone made up of a linked sequence of at least 10 atoms, the backbone preferably being made up of a linked sequence of at most 500 atoms.

The atoms of the linked sequence may be entirely carbon atoms, or they may be predominantly carbon atoms interrupted by hetero atoms, such as oxygen or nitrogen; and the backbone may thus also include olefinic groups.

The chain structure may thus be a hydrocarbon chain wherein the backbone is made up of a linked sequence of 40-500 carbon atoms. This hydrocarbon chain may be saturated or unsaturated and may for example be derived from a polymer of one or more olefins.

Suitable polyolefin polymers from which the hydrocarbon chain may be derived include polymers of olefins containing from 2 to 20 carbon atoms, in particular ethylene, propylene, butene-1 and isoprene, but especially isobutene.

The lipophilic moiety may have an alkylating reactive grouping selected from hydroxyl, amino, carboxyl and carboxylic acid anhydride

reactive groupings, whereby the lipophilic moiety is attached to the hydrophilic moiety.

The alkylating reactive grouping may be a carboxyl group, the lipophilic moiety being a monocarboxylic acid.

Such lipophilic moieties may be derived from polymers obtained by the inter-esterification of one or more saturated or unsaturated long-chain (ie from 5 to 25 carbon atoms) monohydroxy monocarboxylic acids, optionally in admixture with a minor proportion of one or more non-hydroxylic monocarboxylic acids (the latter acting as chain terminators). Commercially available 12-hydroxystearic acid normally contains a minor amount of stearic acid and this substance, for example, may conveniently be used with or without admixture of further mono-functional carboxylic acids to yield by inter-esterification a suitable complex monocarboxylic acid. Depending on the proportion of non-hydroxylic material present, the molecular weight of the resulting complex acid may vary from 500 to 5000.

Inter-esterification of the monohydroxy and non-hydroxylic monocarboxylic acids may be effected by known techniques, for example by heating the reactants in a hydrocarbon solvent such as xylene, in the presence of a catalyst such as tetrabutyltitanate.

The inter-esterification products contain in the molecule a terminal carboxyl group which provides a means of attaching the lipophilic polyester chain to a suitable hydrophilic grouping.

Instead, the alkylating reactive grouping may be a succinic acid anhydride, the lipophilic moiety being a poly(alk(en)yl) succinic acid anhydride.

Poly(alk(en)yl) succinic acid anhydrides are commercially available materials which are made by an addition reaction at an elevated temperature between a polyolefin containing a terminal unsaturated group and maleic anhydride, optionally in the presence of a halogen catalyst. Typical poly(isobutenyl)succinic acid anhydrides have average molecular weights in the range of 400 to 5000.

The succinic anhydride residues in the abovementioned compounds provide a convenient means of attaching the lipophilic hydrocarbon chains to the hydrophilic moiety of the anti-caking agent.

The hydrophilic moiety may be a polar organic residue having a molecular weight of at most 450, preferably at most 300, and more preferably at most 200.

The organic residue is desirably monomeric, although oligomeric residues, containing for example not more than about 10 repeat units, may be employed, provided the molecular weight thereof is within the aforementioned limits.

The polar organic residue may be a grouping selected from the residues of polyols, internal anhydrides of polyols, amines, amides, alkanolamines, azolines and poly(oxyethylene) groupings having at most 10 ethylene oxide units.

Suitable monomeric residues may thus be derived from polyols such as glycerol, pentaerythritol, and sorbitol or internal anhydrides thereof (eg sorbitan); from amines such as ethylene diamine, diethylene triamine and dimethylaminopropylamine; from amides such as 2-hydroxypropanolamide; from alkanolamines such as ethanolamine or diethanolamine; and from heterocyclics such as oxazoline or imidazoline. The short-chain poly(oxythylene) groupings (ie those containing up to 10 ethylene oxide units), can give rise to suitable oligomeric residues.

The simplest type of anti-caking agent consists of a single monomeric or oligomeric residue attached to the lipophilic moiety.

Formation of anti-caking agents for use in accordance with the invention may be effected by conventional procedures depending upon the chemical nature of the lipophilic and hydrophilic moieties involved. For example, where the lipophilic moiety is a poly(isobutenyl)succinic anhydride and the hydrophilic moiety is a polyol or an alkanolamine, the anhydride group can be caused to react with the hydroxyl or amino group by heating the two components together in a suitable solvent in the presence of a catalyst if desired. Where the lipophilic moiety is a complex monocarboxylic acid, the carboxyl group can be caused similarly to react with the hydroxyl or amino groups in a polyol or an alkanolamine. The compositions of the invention may comprise a single anti-caking agent, although a mixture of two or more may be employed, if desired.

An anti-caking agent of the abovementioned type which has successfully been tested by the Applicant comprises an imide according to the formula (I):

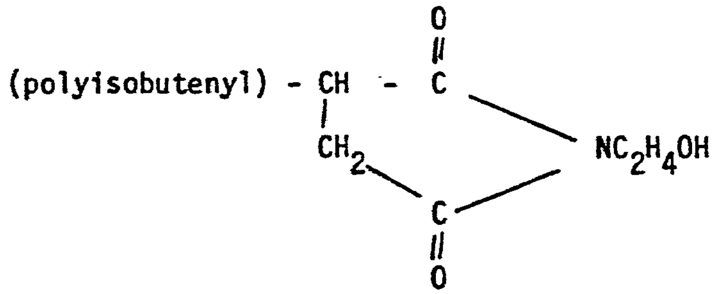 (I)

The anti-caking agent may thus be the reaction product of poly(isobutenyl) succinic acid anhydride and monoethanolamine.

While the imide according to Formula (I) can naturally be used in its pure form, it is in fact usually a product obtained by a reaction of the type described above between poly(isobutenyl)succinic anhydride and monoethanolamine, which gives rise to a mixture consisting predominantly of the imide of formula (I), but also containing diamides, acid amides, etc. The Applicant has found it to be convenient simply to use this mixture of reaction products as the anti-caking agent. It is believed however that the higher the concentration of the imide according to formula (I), the more effective the anti-caking agent will be, but the Applicant has found that other reaction products in the mixture such as the diamides, acid amides or the like are harmless from an anti-caking point of view.

Similarly, the anti-caking agent may be a suitable reaction product obtained by reacting poly(isobutyl)succinic acid anhydride with at least one member of the group comprising polyols, internal anhydrides of polyols, amines, amides, alkanolamines, azolines and poly(oxyethylene) groupings having at most 10 ethylene oxide units.

The amount of anti-caking agent required is generally small. The required amount of anti-caking agent is readily assessed by simple experimental trial.

The particulate material may thus be coated with anti-caking agent in a proportion whereby the anti-caking agent makes up 0,001-10% m/m of the particulate material, preferably 0,01-1,0 % m/m.

The anti-caking agent in the form of the mixture of above reaction products containing the aforementioned imide according to formula (I), has been tested by the Applicant in proportions amounting to 0,04% - 0,06% m/m based on ammonium nitrate prills, to which it was applied.

The coating may be effected by passing the particulate material through a rotatable drum, the drum being rotated as the particulate material passes therethrough and the anti-caking agent being sprayed into the drum and on to the particulate material therein as a liquid spray.

Thus, use can be made of a so-called coating drum fitted with spray nozzles. Ammonium nitrate prills or similar particulate material to be coated can be fed through the drum in a fashion such that it passes through spray zones into which the nozzles spray the anti-caking agent, at such a rate and with sufficient agitation and mixing, that the anti-caking agent is coated on to the prills in the desired proportion, preferably such that each prill or particle has a continuous coating of anti-caking agent.

Before the anti-caking agent is coated on to the particulate material, the anti-caking agent may be heated above ambient temperature.

This acts to facilitate use of the spray nozzles, by reducing the viscosity of the anti-caking agent.

Instead or in addition, before the anti-caking agent is coated on to the particulate material, the anti-caking agent may be diluted with a diluent, eg a solvent, to provide a diluted mixture having a lower viscosity than that of the undiluted anti-caking agent, the particulate material being coated with the diluted mixture.

For the reaction mixture containing the imide according to formula (I) described above, hydrocarbon oil such as HVI-55, available from Shell South Africa (Proprietary) Limited, can be employed as a diluent, the mixture making up, eg from 5-95% m/m, preferably from 25-75% m/m of the solution.

The method may include the step of, after the particulate material has been coated, recovering the diluent from the particulate material.

Thus, if desired, the anti-caking agent may be dissolved in a volatile solvent, after which it is sprayed in an atomized form on to the prills or particles, followed by recovery of the solvent, eg by distillation, for re-use. In laboratory tests carried out by the Applicant, with the aforesaid mixture containing the imide in accordance with formula (I), the Applicant has coated ammonium nitrate prills employing a "Rotavapor" flask within which the anti-caking agent was

applied to the prills using "Arcton 11" hydrocarbon solvent. The Rotavapor flask is made by BUCCHI of Switzerland, and the Arcton 11 is manufactured and sold by the Applicant in South Africa. The appropriate mass of the anti-caking agent was dissolved in the volatile solvent and added to the ammonium nitrate prills in the Rotavapor flask, and after coating had taken place, the vacuum pump of the Rotavapor flask was used, while the flask was rotated, to remove the Arcton 11 from the flask, thereby to recover it.

The particulate material may be a member of the group comprising ammonium nitrate, limestone ammonium nitrate, and urea.

Particulate materials to which the method may be applied are thus typically flowable granular materials such as limestone ammonium nitrate prills, urea crystals or, in particular, ammonium nitrate prills.

Certain of the anti-caking agents employed in accordance with the method of the present invention have been found to have the property of protecting a substrate coated thereby from ultra violet radiation.

Thus, according to another aspect of the invention, a method of treating a substrate to protect it from ultra violet radiation comprises at least partially coating it with a coating material which comprises a protective substance wherein a lipophilic moiety is attached to a hydrophilic moiety by means of an alkylating reactive grouping, the hydrophilic moiety being a polar organic residue having a molecular weight of at most 450 and being a grouping selected from the residues of polyols, internal anhydrides of polyols, amines, amides, alkanolamines,

azolines and poly(oxyethylene) groupings having at most 10 ethylene oxide units.

The protective substance may comprise an imide according to the formula (I):

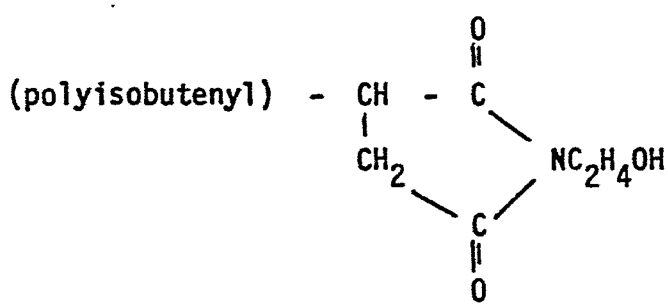

(I)

The protective substance may be the reaction product of poly(isobutenyl)succinic acid anhydride and monoethanolamine, and the substrate may be a particulate material selected from the group comprising ammonium nitrate, limestone ammonium nitrate and urea.

The invention extends to a substrate whenever treated in accordance with the method described above to protect it from ultra violet radiation.

The invention extends further to an anti-caking agent suitable for use in accordance with the anti-caking method described above, which comprises a substance wherein a lipophilic moiety is attached to a hydrophilic moiety by means of an alkylating reactive grouping, the anti-caking agent being a liquid whose constituents are miscible with one another and comprising, mixed together with said substance, a member of the group comprising viscosity reducing agents, colouring agents and radioactive tracers.

The invention extends still further to a coating material suitable for use in accordance with the ultra violet protection method described above which comprises a protective substance wherein a lipophilic moiety is attached to a hydrophilic moiety by means of an alkylating reactive grouping, the hydrophilic moiety being a polar organic residue having a molecular weight of at most 450 and being a grouping selected from the residues of polyols, internal anhydrides of polyols, amines, amides, alkanolamines, azolines and poly(oxyethylene) groupings having at most 10 ethylene oxide units, the coating material being a liquid whose constituents are miscible with one another and comprising, mixed together with said protective substance, a member of the group comprising viscosity reducing agents, colouring agents, and radioactive tracers.

The viscosity reducing agents will typically be diluents such as hydrocarbon oil diluents, and solvents such as the volatile solvents described above.

The invention extends also to a particulate material whenever treated in accordance with the method as described above.

The invention will now be described in more detail, with reference to the following non-limiting illustrative worked examples and the accompanying diagrammatic drawings, in which:

FIGURE 1 shows a schematic illustration in part sectional side elevation of a device for measuring the ability of a particulate material such as ammonium nitrate to cake; and

FIGURE 2 shows a schematic flow diagram of the method of the present invention.

In Figure 1 of the drawings, the device is generally designated by reference numeral 10. It comprises a framework having legs 12 interconnected by upper and lower horizontal frame members designated 14, 16 respectively. On the upper frame member 14 is mounted a downwardly projecting piston and cylinder assembly 18, the cylinder 20 of which is in communication with a filtered compressed air supply pipe 22 provided with a control valve 24 and a pressure gauge 26. The assembly 18 has a piston 28 which projects downwardly and outwardly from a socket member 30 fast with the cylinder 20 and provided with a sealing arrangement 32. The lower end of the piston 28 is provided with a shoe 34.

On the lower frame member 16 is mounted a holder for particulate material generally designated 35. The holder 35 comprises an annular metal base plate 36 having a plug 38 which screws upwardly into its central passage, the plug and passage being correspondingly screw threaded. The inner end of the plug has a flat surface 40 which, when the plug is screwed tightly and fully into said passage in the base plate 36, is in register with the upper surface 42 of the base plate 36, so that the surface 40 forms a co-planar extension of the surface 42, both of said surfaces 40 and 42 being flat and horizontal.

A particle housing in the form of a truncated tubular transparent length of plastics material, having a radially outwardly projecting circumferential flange at its lower end, is bolted concentrically to the upper surface 42 of the base plate 36. The housing is designated 44 and the flange is designated 46, and they are bolted in position by a plurality of circumferentially spaced studs 48.

The inner diameter of the housing 44 is greater than the diameter of the plug 38.

The housing 44 is provided with a cover or closure in the form of a metal disc 50 having an outer diameter corresponding to the inner diameter of the housing, and receivable therein with a sliding fit. The upper surface of the disc 50 is adhesively secured to a circular flexible rubber disc 52 having a diameter somewhat greater than that of the outer diameter of the housing 44, and the upper surface of the rubber disc 52 is in turn adhesively connected to a shallow circular cup-shaped pressure plate 54 having a relatively short circumferential rim, for receiving the shoe 34 of the piston 28. The shoe 34 is in the form of a circular disc, having a diameter less than that of the plug 38. Said shoe 34, the holder 35, the discs 50 and 52, the housing 44, the base plate 36 and its central passage with the plug 38, all being concentrically arranged about a common vertical axis, being the axis along which the piston 38 reciprocates vertically in the cylinder 20.

In use, with the plug 38 screwed fully home into the central passage of the base plate 36 so that the surfaces 40 and 42 are co-planar, the housing 44 is intended to receive a particulate material such as ammonium nitrate whose resistance to caking is to be tested . A charge of particulate material is placed in the housing 44, substantially to fill said housing, and the disc 50 with the disc 52 and pressure plate 54 are placed concentrically on top of the particulate material, so that downward force thereon will tend to urge the disc 50 into the housing 44.

A downward force is then applied to the particulate material, which is shown at 56 in Figure 1, via the disc 50, disc 52 and pressure plate 54, by means of the piston 28. The piston 28 is in turn urged downwardly by compressed air in the cylinder 20 of the assembly 18. The pressure gauge 26 provides an indication of the force delivered by the piston 28 to the particulate material 56.

When a predetermined force has been delivered for a predetermined period to the particulate material, the piston 28 is retracted, and the discs 50, 52 and plate 54 are removed, as a unit, and the plug 38 is unscrewed.

The force delivered to the particulate material, and the period over which it is delivered, will have been preselected so as to cause a degree of caking in the particulate material. To test the degree of caking caused, the piston 28 is then urged downwardly by admission of compressed air into the cylinder 20, into contact with the cake of particulate material 56. Admission of the compressed air into the cylinder 20 is then controlled so that the force of the piston 28 on the cake increases progressively at a predetermined rate. As this force is increased, a stage is reached where the cake of particulate material collapses and falls downwardly from the housing 44 through the central passage in the base plate 36. The pressure in the cylinder 20 which is proportional to this force is displayed by the gauge 26, and provides a measure of the strength of the cake which has been formed.

The device is used more or less empirically, in the sense that particulate material such as ammonium nitrate prills with a known and acceptable resistance to caking is tested as a control in the machine,

and the force required to break a cake which has been formed under known conditions is measured. This force provides a measure of the ability of the ammonium nitrate to cake, or, conversely, its ability to resist caking. Different ammonium nitrate prills, after treatment with an anti-caking agent, can then be tested in the device, and after a further cake has been formed under identical conditions, the force required to break the further cake is measured. A higher breaking force to break the further cake indicates that the treated prills are more prone to caking than the control and a lower breaking force indicates that the treated prills are less prone to caking than the control. Routine tests are thus carried out on controls of known caking properties to establish base data for use of the device, so that the device will give an indication of whether a new sample, eg one treated with an anti-caking agent, will have acceptable resistance to caking or not.

Turning to Figure 2, reference numeral 58 generally designates a flow diagram of the method of the present invention. In the flow diagram, a supply of particulate material to be treated is shown at 60, and a supply of liquid anti-caking agent at 62. A flow line 64 for particulate material is shown feeding from the supply 60 to a coating drum 66 fitted with spray nozzles 68. The supply 62 in turn feeds along flow line 70 to a mixing vessel 72 provided with a stirrer 74 and heating coil 76, and the mixing vessel 72 feeds via flow line 78 to the spray nozzles 68. The drum 66 is shown feeding along flow line 80 to a solvent recovery stage 82, eg a distillation stage. A solvent recirculation flow line 84 is shown leading from the recovery stage 82 to the vessel 72, and the stage 82 has a coated product discharge line 86.

In use, particulate material to be coated is fed from the supply 60 along flow line 64 to the drum 66, into which it is fed. Coating agent is fed along flow line 70 from supply 62 to the mixing vessel 62 where it is dissolved in solvent agitated by the stirrer 74, and is heated above ambient temperature by the coil 76.

From the vessel 72, heated coating agent solution is fed along flow line 78 to the nozzles 68 via which it is sprayed on to particulate material which is being tumbled by the drum 66 as it passes therethrough, in sufficient quantities to coat fully all the particles of the particulate material. Particulate material coated with said solution passes from the drum 66 along flow line 80 to the solvent separation stage 82.

In the solvent separation stage 82, solvent is separated, eg by distillation, from the particulate material and is returned along flow line 84 to the vessel 72. Coated particulate product, coated with coating agent from which solvent has been separated, issues from stage 82 along flow line 86.

Naturally, depending on the coating agent used, it may be possible to dispense with the heating and/or the use of solvent; and one or the other of either heating or dilution will usually be used to reduce coating agent viscosity, both being shown in Figure 2 for purposes of illustration.

EXAMPLE

The device described above with reference to Figure 1, was operated in the fashion described above, for a batch of ammonium nitrate

prills treated with a known prior art anti-caking agent, and for prills from the same batch treated with an anti-caking agent in accordance with the invention, namely the mixture of reaction products comprising imide according to formula (I) described above. In each case the test was carried out in a thermostatically controlled heating cabinet which was set at a temperature of 30°C. A wet and dry bulk thermometer was placed in the cabinet so that relative humidity measurements could be made.

In each case, after a constant temperature and humidity had been reached, a weighed amount of ammonium nitrate (310 g) was introduced into the housing 44, substantially to fill the housing. The sample was then allowed to equilibrate for 2 hours, before the discs 50, 52 with the plate 54 were placed on the sample of ammonium nitrate. A downward force was then applied to the ammonium nitrate by means of the piston, with the gauge 26 showing a reading of 150 kPa. This force was maintained for 20 hours to form a cake of ammonium nitrate from the prills, after which the piston was retracted, the discs 50, 52 and holder 54 removed, and the plug 38 removed. The piston was then lowered so that it touched the surface of the ammonium nitrate cake formed, and compressed air was admitted to the cylinder, so that the air pressure in the cylinder increased at a rate of 1 kPa/sec until the cake broke. The pressure at which the cake broke was measured. Results are set out in the following table:

| Test Number | Relative Humidity | Cake Breaking Pressure |
|---|---|---|
| 1 | 38 | 65 |
| 2 | 40 | 70 |
| 3 | 39 | 75 |
| 4 | 45 | 65 |
| 5 (Control) | 41 | 165 |

With regard to the aforegoing tests (Tests Nos. 1,2,3 and 4), it should be noted that the imide coating agent according to formula (I) in accordance with the invention was coated on to the prills by weighing out 1,5 kg of prills into the Rotavapor flask and the imide anti-caking agent was dissolved in Arcton 11, with 0,84 g of the imide being dissolved in 1,2ℓ of Arcton 11. This solution was added to the Rotavapor flask, and thereafter the vacuum pump of the Rotavapor flask was operated for a period of about 1½ hours to remove substantially all the Arcton 11 therefrom.

The control, comprising "Nuflo 10" anti-caking agent available from JM HUBER & COMPANY, USA, was used for Test No.5 in the Table. From this it can be seen that, under the same conditions, and employing the prior art anti-caking agent, a force (pressure in cylinder 20) two to three times greater was required, to break the cake formed, than when the anti-caking agent according to the present invention was employed.

From past experience which the Applicant has had with the device 10, a pressure in the cylinder 20 of less then 70 kPa to break a cake formed as described above is regarded as extremely good, a

pressure of 70-120 kPa is regarded as acceptable, and a pressure of greater than 120 kPa is regarded as unacceptable. Accordingly, an anti-caking agent of the present invention provides very good results, particularly bearing in mind that the Nuflo 10 provided unacceptable results on the same batch of prills under the same test conditions.

With regard to the above tests, it should be noted that the imide coating agent was used in a proportion of about 0,05-0,06% m/m (0,84 g on 1,5 kg prills) the Nuflo 10 was used in a proportion of 0,4% m/m. Humidity, which can affect results, was for practical purposes substantially constant for the Tests Nos. 1 to 5. It should also be noted that further tests were conducted on low grade ammonium nitrate prills having a high moisture content, in which case a pressure of 165 kPa was required to break the cake to which anti-caking agent comprising the imide of formula (I) had been applied, whereas when Nuflo 10 was used, a pressure of 250 kPa was still insufficient to break the cake formed.

In the device 10 used, the shoe 34 had an outside diameter A of about 66 mm, whereas the housing 44 had an inside diameter B of about 115 mm and a depth C of about 39 mm. The plug 38 in turn had a diameter D of about 79 mm. These significant dimensions are more or less arbitrary, and it will be appreciated that any similar device with different dimensions will give different absolute results. The comparison with the control should however in each case show that use of the imide of formula (I) in the above

described proportions leads to a cake which is easier to break than when Nuflo 10 is used as described above; and in each case when compared with controls or data assembled empirically for acceptable caking properties, the imide of formula (I) should similarly show very good results.

Subsequent laboratory tests and plant trials have been carried out using the same mixture of reaction products containing the imide of Formula (I) as anti-caking agent. The laboratory tests were carried out as described in the Example, but using limestone ammonium nitrate instead of porous prill ammonium nitrate. In these tests the anti-caking agent was found to reduce caking even in batches of material which were not particularly prone to caking. These tests were carried out using the anti-caking agent in the proportions described in the Example.

Subsequent plant trials based upon the test method anti-caking agent described in the Example, where 100 tons of limestone ammonium nitrate were coated in accordance with the method described with reference to Figure 2, were successful. The material produced was tested in plant stacking trials where 200 bags of coated prills were stacked in stacks up to 20 bags deep for up to 3 months without any significant caking. Run of the plant limestone ammonium nitrate was used with the same anti-caking agent according to the invention, and at the same anti-caking agent dosing rates as described in the Example.

Ultra violet stability testing was also carried out on the abovementioned plant-produced limestone ammonium nitrate treated with the same anti-caking agent according to the invention, and at the same dosing rates as described in the Example. Prills coated with this anti-caking agent showed no traces of degradation after being exposed to ultra violet light for periods of up to a week, under conditions where control prills coated with known anti-caking agents showed substantial degradation.

Subsequent comparative caking tests of limestone ammonium nitrate coated with the anti-caking agent described in the Example and limestone ammonium nitrate coated with "LILAMIN 59 AC" (a competitive anti-caking agent available from Apeco Limited) showed the anti-caking agent of the present invention to be superior; viz. LILAMIN coated material exhibited 16,3% m/m degree of caking whereas the material coated with the anti-caking agent of the present invention caked to only 6,5% m/m, ie only 6,5% m/m thereof was found to be caked.

Laboratory tests have also been carried out using the same mixture of reaction products described in the Example as anti-caking agents for reduction in caking of urea prills. Results as in the Example showd a reduction in caking of the products, even in material which was not significantly prone to caking.

The present invention accordingly provides an effective method of treating caking in ammonium nitrate prills, and the invention extends also to such prills when treated according to the method of the invention, and to other particulate materials which are treated in accordance with the method of the invention.

In addition, other products may be added to a formulation of the imide of Formula (I) such as oil diluents, solvent diluents, volatile solvent diluents, colouring agents such as UV-sensitive products, or other functional products such as radio-active tracer materials.

1. Particulate material wherein at least some of the particles are at least partially coated with an anti-caking agent comprising a substance wherein a lipophilic moiety is attached to a hydrophilic moiety by means of an alkylating reactive grouping.

2. Particulate material according to claim 1 which is ammonium nitrate, limestone ammonium nitrate or urea.

3. Particulate material according to either claim 1 or claim 2 wherein the proportion of anti-caking agent is 0.001-10% m/m.

4. An anti-caking agent comprising a substance wherein a lipophilic moiety is attached to a hydrophilic moiety by means of an alkylating reactive grouping.

5. An anti-caking agent according to claim 4 wherein the lipophilic moiety has an alkylating reactive grouping selected from hydroxyl, amino, carboxyl and carboxylic acid anhydride reactive groupings, whereby the lipophilic moiety is attached to the hydrophilic moiety.

6. An anti-caking agent according to either claim 4 or cxlaim 5 wherein the alkylating reactive grouping is succinic acid anhydride, the lipophilic moiety being a poly(alk(en)yl)succinic acid anhydride.

7. An anti-caking agent according to any one of claims 4 to 6 wherein the hydrophilic moiety is a polar organic residue having a molecular weight of at most 450 and is selected from the residues of polyols, internal anhydrides of polyols, amines, amides, alkanolamines, azolines and poly(oxyethylene) groupings having at most 10 ethylene oxide units.

8. An anti-caking agent according to claim 4 which comprises an imide of the formula (I)

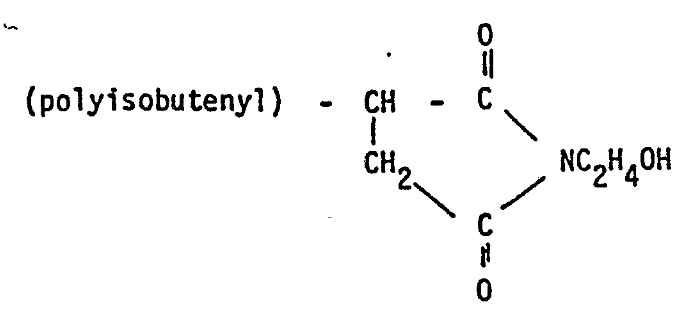

(I)

9. A method of treating a particulate material to combat caking thereof, which comprises at least partially coating at least some of the particles thereof with an anti-caking agent as defined in any one of claims 4 to 8.

10. A method of treating a substrate to protect it from ultra-violet radiation which comprises at least partially coating it with a coating material which comprises a protective agent as defined in either claim 7 or claim 8.

0202753

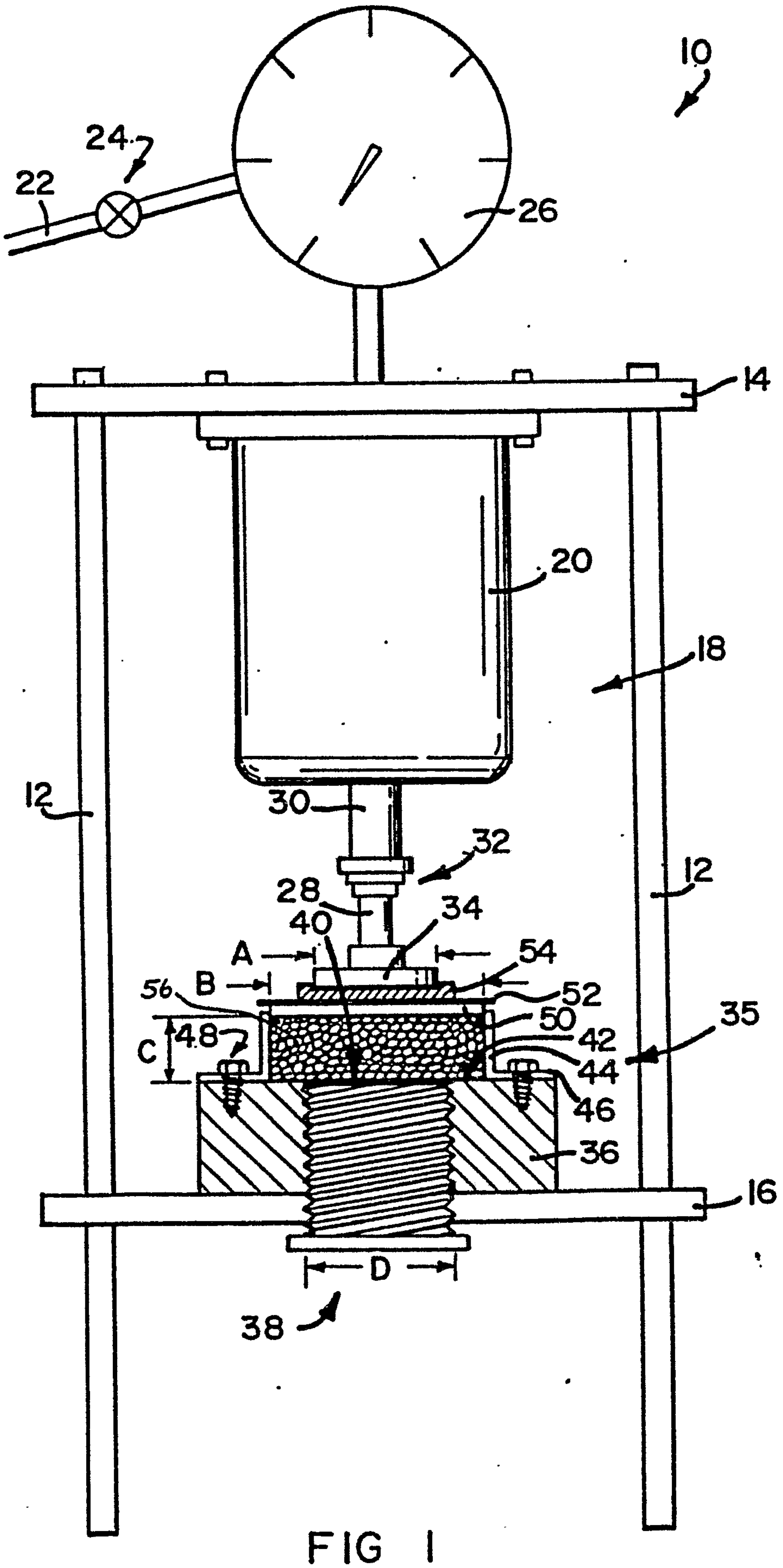


FIG 1

0202753

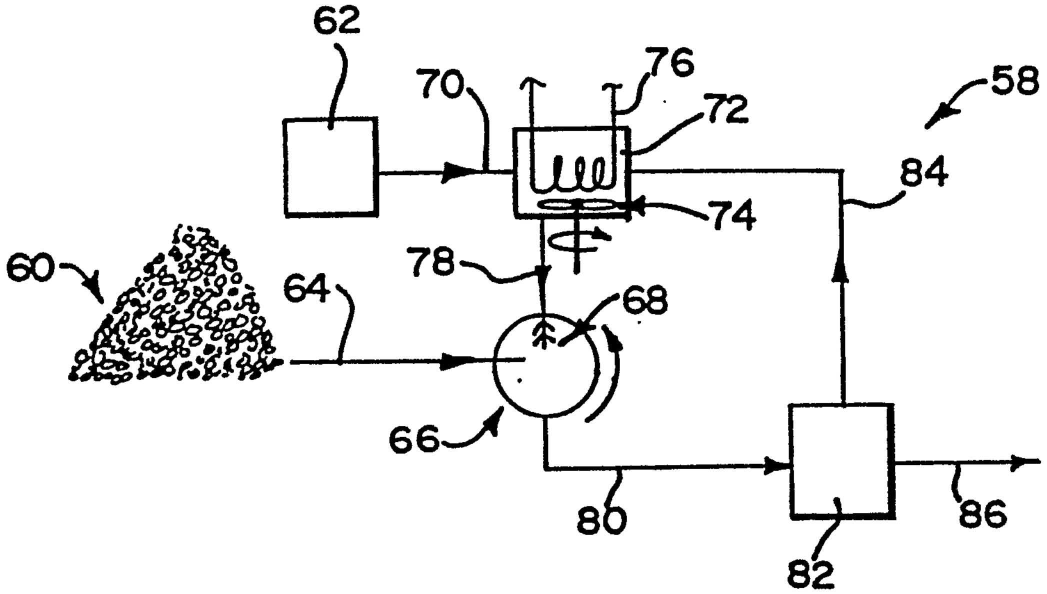


FIG 2